# EUROPEAN PATENT APPLICATION

(11) **EP 1 201 617 A1**
(43) Date of publication of application: **02.05.2002**
(21) Application number: 00123221.4
(22) Date of filing: 26.10.2000
(51) Int. Cl.: C04B 28/02

(54) **Cement compositions with high durability**

(71) Applicant: Mapei S.p.A., I-20158 Milano (IT)
(72) Inventor: Cerulli, Tiziano, 20158 Milano (IT); Clemente, Paolo, 20158 Milano (IT); Ferrari, Giorgio, 20158 Milano (IT); Pistolesi, Carlo, 20158 Milano (IT)
(74) Representative: Minoja, Fabrizio, Dr.

(57) **Abstract**

High durability cement composition, comprising a cement material and a not thermally treated clayey material, which can also consist in a sediment of contaminated sludges; further, the composition can optionally contain a plasticizing or superplasticizing admixture and/or alkali metal silicates and divalent and trivalent soluble salts, and can be used for the solidification/stabilization of toxic wastes or anyhow sludgy wastes.

## Description

The present invention relates to new cement compositions for the use in the construction industry.

More particularly, the present invention relates to cement compositions characterised by high performances and improved durability.

It is known that cement materials undergo a degradation caused by the environmental conditions and by the load they are subjected to in their service time. Furthermore, the extent of the degradation and the rate it occurs are determined also by the characteristics of the materials used for the production of the cement composition. All these conditions are expressed by the concept of "durability", defined as the capacity of the cement structure to maintain the functions and the characteristics it has been projected to for the whole period of service.

Examples of aggressive environmental conditions are those in which the cement structures are subjected to the action of salts, as those exposed to sea water or to de-icing salts used to prevent the ice formation along the road bridges, or in the structures subjected to the washing out by running water. Further examples of aggressive environments for the cement structures are represented by the waste landfills, where the acid leachate resulting from the waste is strongly aggressive towards the cement paste. In all these cases, the main cause of the degradation is inherent the chemical process of the cement hydration itself. In fact, the hydration of the silicate phases, which is responsible for the development of the mechanical strength of the hardened cement, causes, at the same time, the formation of calcium hydroxide, or hydrated lime, according to the following reaction scheme:

C₂S, C₃S + H₂O = C-S-H + Ca(OH)₂

where C₂S and C₃S are the anhydrous silicate phases of cement, whereas the C-S-H indicates the hydrated silicate phases.

Calcium hydroxide, Ca(OH)₂, which forms by cement hydration, has a sufficient solubility to considerably dissolve in the aqueous phase of the pores of the cement paste and can be washed away, as in the case of structures exposed to running water. The consequent increase of the porosity of the cement matrix due to Ca(OH)₂ dissolution causes the weakening of the structure and accelerates its degradation.

These drawbacks can be limited by the use of superplasticizers, special synthetic polymers that allow to reduce the viscosity of the fresh cement mixtures and to easily cast them, even by using low amount of water (low water-cement ratio). As a consequence, the resulting structure has a denser matrix and is less porous. By this way, the water penetration and the dissolution of Ca(OH)₂ are remarkably reduced and the durability of the structure is correspondingly improved.

Nevertheless, by this way it is not possible to prevent efficiently the deterioration due to the action of some chemical aggressive agents, such as chlorides and sulphates, which the cementitious structures can be frequently exposed to in aggressive environments. These compounds are chemically reactive to calcium hydroxide, Ca(OH)₂, and can, under particular conditions, give origin to expansive reaction products that cause the expansion of the cement matrix and the weakening of the structure. In addition, calcium hydroxide is easily attached by the acid environment often present in the sewage systems.

Furthermore, It has been found that the decrease of the porosity of the cement paste, which can be obtained by reducing the mixing water (low water/cement ratio), in some cases do not prevent the aforementioned disadvantages but can even worse them, as in the case of the structures exposed to calcium chloride in cold climates, that are degraded more rapidly if the cement mixture is characterized by a low W/C ratio. As reported by the scientific literature in this field ("S. Chatterji and D. Jensen, Satrych ur Nordisk Betong, 5, 1-2, 1975" and "S. Monosi, I. Alverà and M. Collepardi, Il Cemento, 1, 3-8, 1990") the causes of such behaviour is the formation of an expansive compound, calcium oxychloride, due to the reaction of calcium chloride and calcium hydroxide present in the hydrated cement paste.

The addition of inorganic additives to the mixes, in combination with superplasticizers, allows to remarkably improve the durability of the cement structures exposed to aggressive environments. Such materials, called pozzolanic additives, consist of siliceous materials that can react with the calcium hydroxide formed by the cement hydration, producing hydrated siliceous compounds which are chemically stable and insoluble. The consumption of the free lime by reaction with these additives reduces the risk of degradation by the aforementioned aggressive agents (chlorides, sulphates) and, at the same time, improves the mechanical strength and the durability of the structure.

Such pozzolanic additives comprise, besides the natural pozzolana, blast furnace slag, fly ash and silica fume. More recently, new pozzolanic additives, derived the combustion of the residues of some natural products, such as the mowings of the sugar cane (US Pat. 4,249,954) and the rice husks (US Pat. 5,329,867) have been claimed as pozzolanic materials. In US Pat. 5,846,314 the use of calcined clays (metacaolin) resulting from petroleum ores have been claimed. Such sandy materials, after purification, are heated at temperatures between 450 and 925°C in order to accomplish the dehydration of the clayey material and the formation of metacaolin.

Nevertheless, these materials have the disadvantage to react rather slowly with calcium hydroxide and therefore they cannot effectively prevent the action of the aggressive agents during the first period of life of the cement structure, which is the most critical since the cement paste is not completely hardened and still shows an open pores microstructure, even at low W/C ratio.

It has been now surprisingly found that there are materials which, added to cement mixtures, exhibit an immediate reaction with calcium hydroxide and can be conveniently used to improve the durability of the cement materials exposed to aggressive environments just after the casting. These materials, which are the object of the present invention, differ from those used up to now since they do not derive from the thermal processes that are the basis of both natural and artificial pozzolanic materials, but are based on clayey materials not thermally treated. The reactions which occur between the calcium hydroxide and most of the clayey materials are very complicated and comprise substantial modification of the crystal lattice characterizing the clay matrix through processes of ionic exchange, flocculation-agglomeration, intercalation and formation of hydrated aluminates and silicates. Such reactions are widely described in the scientific literature in this field ("National Lime Association, Fundamentals of Soil Stabilization with Lime, Bulletin 332, 1987") and are the basis of the stabilization technology with lime, widely used for the consolidation of soil and road substrates.

The not thermally treated clay materials useful for the cementitious compositions object of the present invention can be added to the other additives commonly used in the cement mixtures, such as the superplasticizers used to improve the fluidity and/or to reduce the W/C ratio, the accelerating or retarding additives used to modify the rate of the hydration reaction of cement and the air-entraining agents used to improve the performances of the cement structures exposed to cold climates.

The water reducing admixtures and the superplasticizers which can be used in conjunction with the not thermally treated clay materials of the present invention consist, for example, of salts of naphthalene sulfonate polymers, salt of melamine sulfonate polymers, lignosulfonates, salts of polycarboxylate polyether modified polymers and gluconates.

The not thermally treated clay materials useful for the cement compositions of the present invention can be used in conjunction with the traditional pozzolanic materials formed by natural or artificial thermal treatments such as the pozzolana, the tufo, the fly-ash and the silica fume.

In order to further improve their performances, to the cement mixtures object of the present invention can be added the additives commonly used in the soil stabilization. Such additives comprise silicates of alkaline metals and soluble salts of divalent metals, such as those reported in US Patent 5,820,302, particularly Ca(NO₃)₂.

The not thermally treated clay materials useful for the cement compositions of the present invention, can be added to cement mixtures in different proportions, from 2 to 200%, based on the weight of the cementitious materials. They are usually added according to the typical dosages of the traditional pozzolanic materials, that is in the range between 2 and 50%, preferably between 10 and 30% by weight of the binding materials. Higher dosages are recommended when the cementitious material comes into contact with particularly aggressive environments, as in the case of the waste dumps.

Superplasticizers can be added to the cement compositions of the present invention, at dosages between 0,1 and 30%, preferably between 1 and 20% by weight of the cement materials.

The characteristics and the advantages of the cement mixtures containing the not thermally treated clayey materials of the present invention will become more clear and evident in the following examples.

### EXAMPLE 1

In this example the improvement of the durability of cement mixtures containing the not thermally treated clay materials of the present invention is shown.

Two different mortars were produced, one containing a not thermally treated clay sediment (MIX A) and one without the sediment (MIX B). The mixtures were prepared according to ENV 197/1 norm, with the same water-cement ratio (W/C = 0.38) and the same workability (70 %, measured as flow table). After curing in standard conditions (28 days at 20 °C and 95% r.h.), the mortar specimens were immersed in a 30 % CaCl₂ aqueous solution at 5 °C for different times. In these conditions, the formation of calcium oxychloride (Friedel's salt), is favoured. This compound, which is formed by the reaction between CaCl₂ and the free Ca(OH)₂ present in the cement mixture, is strongly expansive and cause the deterioration of the cement structure. The deterioration of the two cement compositions (MIX A and MIX B) was tested by measuring the compressive strength after different period of immersion in the CaCl₂ solution. The characteristics of the sediment used and the composition of the different cement mixtures are shown in the following Tables 1 and 2, respectively.

**Table 1.**

| **Characteristics of the not thermally treated clayey sediment used for MIX A.** | | |
|---|---|---|
| SEDIMENT COMPOSITION | Dolomite | 20 % |
| | Silica | 10 % |
| | Illite | 30 % |
| | Caolinite | 20 % |
| | Clorite | 12 % |
| MEAN PARTICLE SIZE | | 13 µm |

**Table 2.**

| **Composition and characteristics of the different mortars (MIX A and MIX B)** | | |
|---|---|---|
| INGREDIENT | MIX A | MIX B |
| Type III Portland cement | 5000 g | 5000 g |
| Silica sand | 5500 g | 6728 g |
| Clayey sediment (Table 1) | 1228 g | No addition |
| Acrylic superplasticizer (30 % soln) | 300 g | 50 g |
| Water | 1672 g | 1847 |
| W/C | 0.38 | 0.38 |
| Flow Table (%) | 70 | 71 |

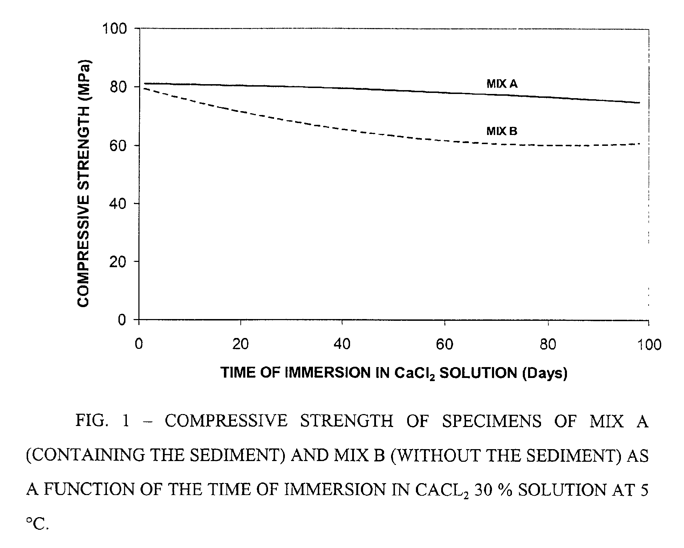

In order to obtain the same flowability of the cement mixtures and the same W/C, different dosages of superplasticizer were necessary, indicating that the addition of the mortar containing the sediment (MIX A) requires more superplasticizer to obtain the same fluidity of the mixture non containing the sediment (MIX B). From Fig. 1, which shows the compressive strength of the different mortar specimens cured for different periods of time in CaCl₂ 30 % solution at 5 °C, it is possible to observe that the mortar not containing the sediment (MIX B), shows a definite decrease of the compressive strength as a function of the time of curing in the CaCl₂ solution, while the mortar containing the sediment (MIX A) maintains almost unchanged its mechanical characteristics. This result confirms the efficiency of the not thermally treated clayey material in increasing the durability of the cement mixtures.

### EXAMPLE 2

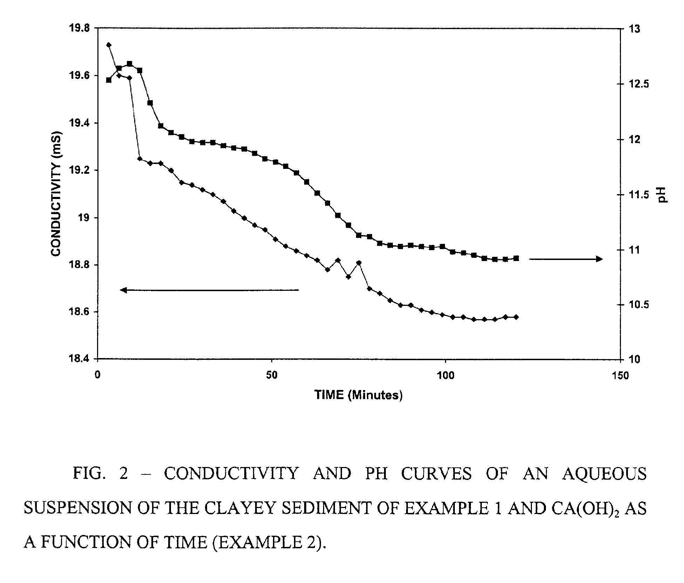

100 grams of clayey sediment of Example 1 and 10 grams of Ca(OH)₂ were introduced in a glass beaker and mixed with 400 grams of distilled water. This suspension was stirred for 4 hours and the pH and the conductivity of the suspension were measured by specific electrodes every 3 minutes. The curves of the conductivity and the pH as a function of time are shown in Fig. 2. These results indicate that both pH and conductivity considerably decrease during the first two hours of mixing, confirming that the not thermally treated clayey sediment reacts with calcium hydroxide since the beginning of their mixing.

### EXAMPLE 3

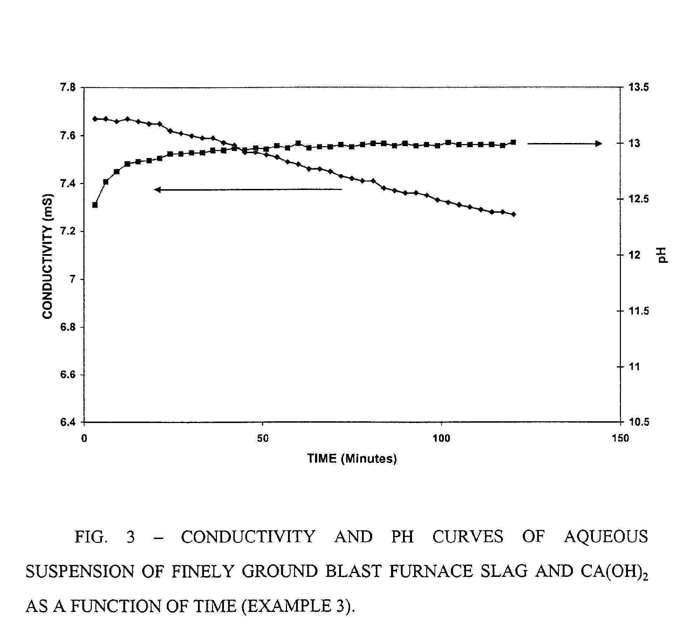

The experiment of Example 2 was repeated by using an equivalent amount of finely ground blast furnace slag in substitution of the not thermally treated clayey sediment. This material is commonly used in cement compositions as pozzolanic additive. The results of this experiment are shown in Fig. 3 and indicate that neither the pH nor the conductivity of the suspension show appreciable variations during the first two hours of mixing. These results confirm that the reaction of calcium hydroxide with the traditional pozzolanic materials proceeds much more slowly than for the not thermally treated clayey materials of the present invention.

### EXAMPLE 4

Two different cement compositions characterized by the same water-cement ratio (W/C = 0.38), one containing the same clayey sediment of Example 1 (MIX C) and the second without the sediment (MIX D), were prepared and cured at 20 °C and 95 % r.h.. The composition of the two cement mixtures are shown in Table 3.

**Table 3.**

| **Composition of the cement mixtures used for thermogravimetric analyses (MIX C and MIX D)** | | |
|---|---|---|
| **INGREDIENT** | **MIX C** | **MIX D** |
| Type III Portland cement | **100 G** | **100 G** |
| Clayey sediment of Table 1 | **24.56 G** | **NO ADDITION** |
| Acrylic superplasticizer (30 % soln) | **6 G** | **6 G** |
| Water | **33.44 G** | **33.44 G** |
| | | |

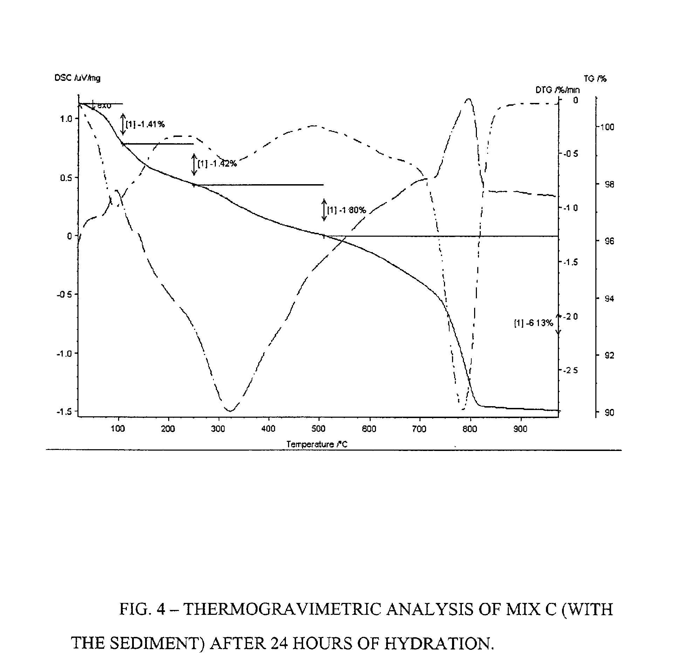

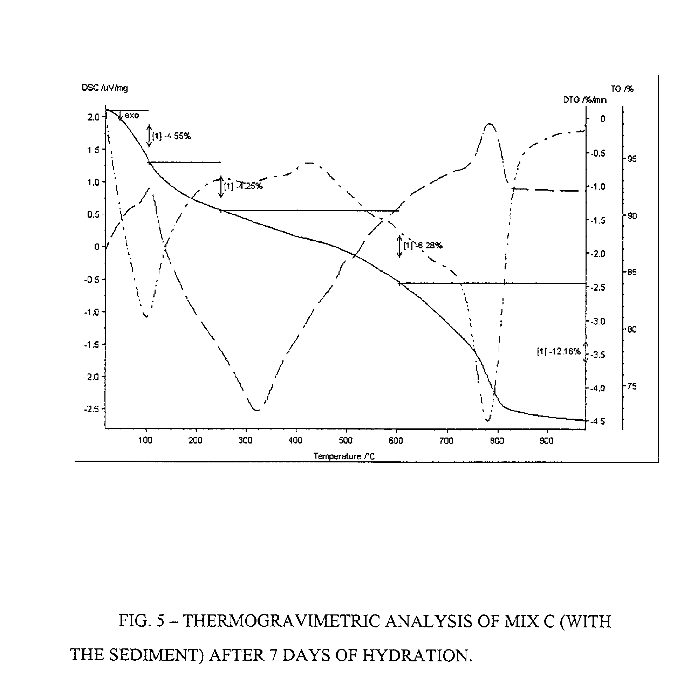

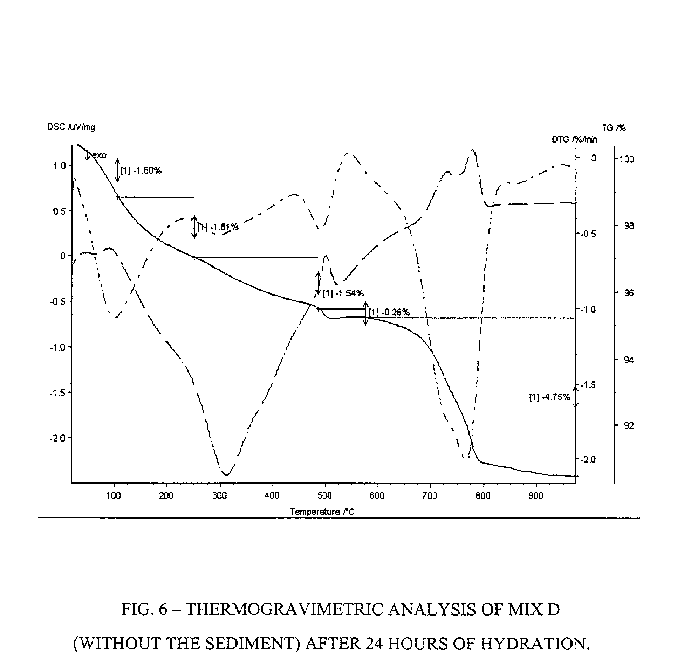

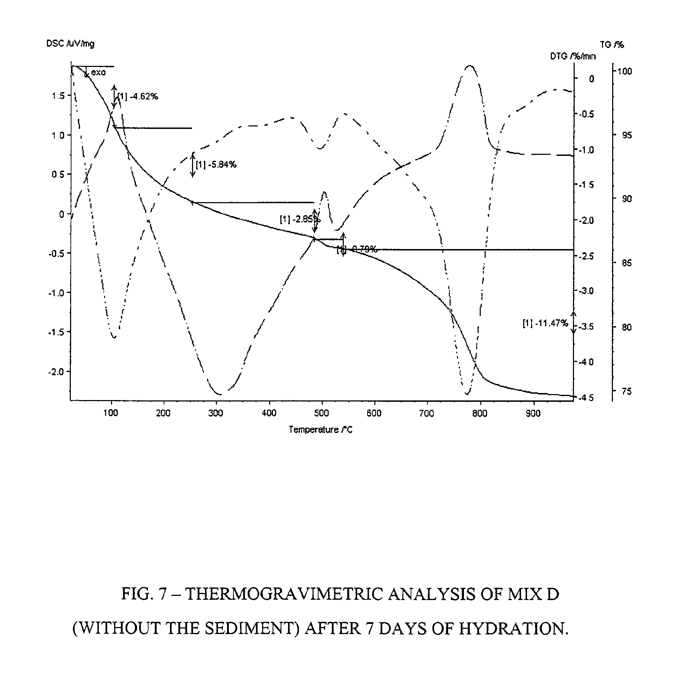

After 24 hours and 7 days of curing in the aforementioned conditions, the amount of free calcium hydroxide in both the mixtures was measured by thermogravimetric analysis. The thermogravimetric analysis of the samples containing the sediment after 24 hours and 7 days of hydration are shown in Figs. 4 and 5, respectively, while those without the sediment are reported in Figs. 6 and 7. The results of this experiments show that the analyses of MIX D (without the sediment) confirm the presence of the thermal decomposition peak of Ca(OH)₂ (at temperature of about 500 °C), while this peak is not present in the samples of MIX C, which contains the sediment. These results clearly indicate that the calcium hydroxide formed by cement hydration has completely reacted with the clayey sediment and confirm the ability of the not thermally treated clayey materials of the present invention to react with the Ca(OH)₂ present in the cement mixtures and to correspondingly improve the durability of cement mixtures.

### EXAMPLE 5

In this example are illustrated the properties of the cement mixtures of the present invention for the stabilization of wastes. For this purpose, a waste sample consisting of a sludge from the production of zinc and copper by electrolytic process has been mixed, in order to solidify and stabilize the toxic metals, together with the cement mixture of the present invention. The characteristics of the sludge, in term of toxic metals contamination, are reported in the following Table 4.

**Table 4.**

| **Toxic metal contamination of the waste used for the solidification/stabilization test** | |
|---|---|
| **CONTAMINANT** | **CONCENTRATION (MG/KG)** |
| **HG** | **400** |
| **CD** | **600** |
| **PB** | **6100** |
| **AS** | **1730** |
| **CR** | **750** |
| **CU** | **4250** |
| **NI** | **600** |
| **ZN** | **46100** |

The composition and the characteristics of the cement mixture containing the waste are shown in the following Table 5.

**Table 5.**

| **Composition and characteristics of the cement mixture used for the solidification/stabilization process of the waste of Table 4** | |
|---|---|
| **COMPOSITION OF THE MIXTURE** | |
| **TYPE III PORTLAND CEMENT** | **1300 G** |
| **SILICA SAND** | **1430 G** |
| **NOT THERMALLY TREATED SEDIMENT** | **260 G** |
| **WASTE SLUDGE OF TABLE 4** | **50 G** |
| **ACRYLIC SUPERPLASTICIZER (30 % SOLN)** | **65 G** |
| **WATER** | **429 G** |

| **CHARACTERISTICS** | |
|---|---|
| **W/C** | **0.37** |
| **COMPRESSIVE STRENGTH (28 DAYS OF CURING)** | **71 MPA** |

After 28 days of curing, at 23 °C and 95 % r.h., a hardened specimen of the cement mixture of Table 5 has been crushed and digested with 0.5 N acetic acid according the TCLP (Toxicity Characteristic Leaching Procedure) procedure of the U.S. Environmental Protection Agency (USEPA). The results of the leaching test are reported in the following Table 6.

**Table 6.**

| **Results of the TCLP USEPA leaching test on the cement mixture of Table 5** | | |
|---|---|---|
| **CONTAMINANT** | **LEACHING TEST ON THE ORIGINAL WASTE** | **LEACHING TEST ON THE SOLIDIFIED/STABILIZED WASTE** |
| | **LEACHING (MG/L)** | |
| **HG** | **0.44** | **< 0.002** |
| **CD** | **1.8** | **0.002** |
| **PB** | **30** | **< 0.04** |
| **AS** | **9.8** | **< 0.005** |
| **CR** | **0.9** | **0.18** |
| **CU** | **1.6** | **0.02** |
| **NI** | **3** | **0.05** |
| **ZN** | **789** | **0.05** |

The results of the TCLP leaching test in 0.5 N acetic acid indicate that the leaching values of the solidified/stabilized composition are very low in comparison with those of the untreated waste. These surprisingly good results can be ascribed to the presence of the not thermally treated clayey material of the present invention, which react with calcium hydroxide and correspondingly increase the mechanical resistance towards acids and aggressive agents and the durability of the structure.

### EXAMPLE 6

In this example the use of contaminated clayey sediments for the present invention is illustrated. For this purpose, a contaminated sediment from the Venice lagoon has been used. The characteristics of the sediments are illustrated in Table 7.

**Table 7.**

| **Characteristics and levels of contamination of the Venice lagoon sediment used** | |
|---|---|
| **PARAMETER/CONTAMINANT** | **VALUE** |
| **SOLID CONTENT (%)** | **43.1** |
| **MEAN PARTICLE DISTRIBUTION (µM)** | **11.6** |
| **SPECIFIC WEIGHT (G/ML)** | **1.37** |
| **AS (MG/KG OF DRY SEDIMENT)** | **45** |
| **CD (MG/KG OF DRY SEDIMENT)** | **70** |
| **CR (MG/KG OF DRY SEDIMENT)** | **158** |
| **CU(MG/KG OF DRY SEDIMENT)** | **312** |
| **HG (MG/KG OF DRY SEDIMENT)** | **68** |
| **NI (MG/KG OF DRY SEDIMENT)** | **18** |
| **PB (MG/KG OF DRY SEDIMENT)** | **550** |
| **ZN (MG/KG OF DRY SEDIMENT)** | **6731** |

This sediment has been used to produce a mortar mixture (MIX E) which was compared with an equivalent mixture not containing the sediment (MIX F). The compositions of both the mixture are shown in Table 8.

**Table 8.**

| **Composition and characteristics of MIX E and MIX F** | | |
|---|---|---|
| INGREDIENT | MIX E | MIX F |
| Type III ASTM Portland cement | 5000 g | 5000 g |
| Silica sand | 5500 g | 6728 g |
| Contaminated sediment | 2850 g | No addition |
| Acrylic superplasticizer ( 30 % soln)) | 300 g | 50 g |
| Water | 0 | 1795 g |
| W/C | 0.36 | 0.36 |
| Flow (%) | 62 | 63 |

Also in this case, in order to achieve the same W/C and the same workability for both the mixes, it was necessary to use a higher dosage of acrylic superplasticizer in MIX E than in MIX F. In any case, the different dosage do not affect the results of this test. The results of the compressive strength, after curing for 28 days in normal conditions (20 °C, 95 % r.h.) and after additional 90 days in 30 % CaCl₂ solution at 5 °C are shown in the following Table 9.

**Table 9.**

| **Compressive strength of mortar specimens of Example 5 in different curing conditions.** | | |
|---|---|---|
| IX | COMPRESSIVE STRENGTH AFTER 28 DAYS AT 20 °C | COMPRESSIVE STRENGTH AFTER ADDITIONAL 90 DAYS IN CaCl2 SOLN. |
| | 85 | 83 |
| | 84 | 71 |

These results confirm those obtained in the Example 1 of the present invention and indicate that the cement mixture containing the contaminated sediment of the Venice lagoon (MIX E) performs much better than the mixture which does not contain the sediment. These results confirms the efficiency of the contaminated sediment in increasing the durability of the cement mixtures.

The environmental compatibility of the cement mixture obtained by using the contaminated sediment (MIX E) has been evaluated in comparison with MIX F, not containing the sediment. Leaching tests were conducted according to the ANSI/ANS-16.1.1986 method, by measuring the cumulative leaching of the toxic metals in distilled water after different periods of time of immersion of cylindrical specimens of MIX E and MIX F, previously cured for 28 days in normal conditions (20 °C, 95 % r.h.). The results of the leaching tests are shown in Table 10.

**Table 10.**

| **Results of the cumulative leaching tests after 300 days for MIX E and MIX F.** | | |
|---|---|---|
| CONTAMINANT | MIX E | MIX F |
| | Cumulative Leaching (µg/l) | |
| As | 0.8 | 0.5 |
| Cd | 0.1 | 0.1 |
| Cr | 53.9 | 65.6 |
| Cu | 8.0 | 6.9 |
| Hg | 0 | 0 |
| Ni | 0.7 | 4.5 |
| Pb | 3 | 8.1 |
| Zn | 0 | 0 |

These results indicate that the leaching characteristics of toxic metals from MIX E, containing the contaminated sediment, are comparable to those of MIX F, not containing the sediment, confirming the effectiveness of the solidification/stabilization process of wastes in the presence of the not thermally treated clayey materials of the present invention.

## Claims

1. Cement compositions comprising at least one binding material and one not thermally treated clayey material;

2. Compositions according to Claim 1, further comprising a plasticizing or superplasticizing admixture;

3. Compositions according Claims 1 or 2, in which the said not thermally treated clayey material is selected within the groups comprising illite, clorite, caolinite, albite, bentonite, smectite, eventually in combinations and/or mixed with other inorganic matrices such as silica, carbonate, dolomia and feldspar mineral matrices;

4. Composition according Claims 1 or 2, in which said binding material is selected in the group comprising mixtures of Portland cement, pozzolanic cement, alumina cement, calcium sulfate, blast furnace slag cement, fly ash, silica fume;

5. Composition according to Claim 2, where said plasticizer or superplasticizer admixture is selected within the group comprising alkali or earth alkali salts of naphthalene sulfonic acids condensed with formaldehyde, alkali or earth alkali salts of sulfonated amino-s-triazine condensed with formaldehyde, polycarboxylate superplasticizers, including polyacrylic copolymers and polyether modified polycarboxylates copolymers, alkali or earth alkali salts of polystyrene sulfonic acids, hydroxycarboxylic acids and their salts;

6. Composition according Claim 2 or 5, in which the dosage of plasticizing or superplasticizing admixture is in the range between 0.1 and 30 per cent, preferably between 1 and 20 per cent by the weight of the binding material;

7. Composition according one of the previous claims, comprising alkali silicates or soluble salts of divalent and trivalent metals.

8. Composition according one of the previous claims, where the not thermally treated clayey material is in the range between 2 and 200 per cent, preferably between 5 and 50 per cent by the weight of the binding material;

9. Composition according one of the previous claims further comprising aggregates for the production of mortars and concrete;

10. Composition according one of the previous claims, where said not thermally treated clayey material is a sediment contaminated by heavy metals;

11. Use of a composition according one of the previous claims for the solidification/stabilization of toxic and dangerous wastes;

12. Method for the solidification/stabilization of sludges containing toxic substances, including heavy metals, comprising the mixing of said sludges with any of the cement compositions of claims from 1 to 10.
